# EUROPEAN PATENT SPECIFICATION

(11) **EP 3 572 212 B1**
(45) Date of publication and mention of the grant of the patent: **01.10.2025**
(21) Application number: 18173909.5
(22) Date of filing: 23.05.2018
(51) Int. Cl.: B29C 64/214, B29C 64/321, B33Y 30/00, B33Y 40/00, B29C 64/153, B33Y 10/00, B29C 64/393, B33Y 50/02, B22F 3/105, B22F 10/30, B22F 10/28

(54) **METHOD FOR ADDITIVELY MANUFACTURING THREE-DIMENSIONAL OBJECTS**
VERFAHREN ZUR GENERATIVEN FERTIGUNG DREIDIMENSIONALER OBJEKTE MIT TEILWEISEM BESCHICHTEN
PROCÉDÉ DE FABRICATION ADDITIVE D'OBJETS TRIDIMENSIONNELS

(43) Date of publication of application: 27.11.2019
(73) Proprietor: Concept Laser GmbH, 96215 Lichtenfels (DE)
(72) Inventor: Werner, Jürgen, 96215 Lichtenfels (DE)
(74) Representative: Hafner & Kohl PartmbB

(56) References cited:
- EP-A1- 2 386 405
- WO-A1-2018/017082
- US-A1- 2014 302 187

## Description

The disclosure relates to an apparatus and method for additively manufacturing three-dimensional objects by means of successive layerwise selective irradiation and consolidation of layers of a build material which can be consolidated by means of an energy source, which apparatus comprises an application unit that is adapted to layerwise apply build material in an available build plane that extends between two build plane edges.

Apparatuses for additively manufacturing three-dimensional objects that comprise application units that are adapted to apply layers of build material that are afterwards (selectively) irradiated via an energy source are generally known from prior art. Typically, the build material is applied in an available build plane in which the build material can afterwards be consolidated. After the consolidation process is finished, another layer of build material is applied onto the previously consolidated layer of build material to allow for successively and layerwise building the three-dimensional object.

The build plane typically extends between two build plane edges, for example provided between two walls of a build module in which a (height adjustable) carrying element is provided for carrying the build material, wherein the height of the carrying element may be adjusted after the layer of build material has been consolidated to allow for a fresh layer of build material to be applied. Of course, it is also possible to arbitrarily define the edges, for example build sidewalls that delimit the build plane additively during the additive manufacturing process, for example onto a fixed carrying element, i.e. an arbitrary surface on which build material can be applied.

The irradiation of build material and the application of build material significantly contribute to the manufacturing time, i.e. the time required for additively building the three-dimensional object. Thus, it is known that for reducing the overall manufacturing time it is possible to reduce the time required to perform the irradiation process and/or the application process, wherein, for example, the application of build material may be performed faster to reduce the time required to apply the build material. The velocity with which build material is applied onto the build plane cannot be chosen arbitrarily, as too high velocities may have a negative impact on the application quality, for example causing non-consolidated build material to swirl up. EP2386405A1 discloses the preamble of claim 1.

It is an object of the present disclosure to provide a method for additively manufacturing three-dimensional objects, wherein the manufacturing time can be reduced, in particular the application time that is required for applying layers of build material can be reduced.

The object is inventively achieved by a method according to claim 1.

Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the disclosure relates to an apparatus for additively manufacturing three-dimensional objects comprising an application unit that is adapted to apply build material in an available build plane which build material can afterwards be consolidated to successively form the three-dimensional object. The invention is based on the idea that the application unit is adapted to apply at least one layer of build material along an application path in a sub-part of the available build plane, wherein the application path starts at a starting point (e.g. a build plane edge or the edge of a dose plane or any other arbitrary initial position) and ends at an endpoint between the build plane edges. According to the invention, the application unit is not only adapted to apply build material over the entire available build plane, but it is inventively achieved that a partial application of build material in the available build plane, i.e. in a sub-part of the available build plane, is feasible.

The application unit may therefore, apply build material along an application path which starts at a starting point and ends at an endpoint. The endpoint is arranged between the build plane edges allowing for a partial application of build material in the available build plane. Therefore, only a sub-part of the available build plane is used and build material is applied only in that sub-part via the application unit applying build material along the application path. The starting point can for example lie at one of the two build plane edges and, as described before, the endpoint lies between both build plane edges, i.e. in the available build plane. Thus, in this example, the sub-part of the build plane is defined via the application path from the starting point to the endpoint.

By applying build material only in the sub-part of the entire available build plane, it is possible to ensure that the time required for applying build material in the build plane is significantly reduced. For example, if only a minor sub-part of the available build plane is required to irradiate the build material, i.e. to form the part of the three-dimensional object that is to be irradiated in the corresponding layer, it is sufficient to apply build material in the sub-part in which the build material is to be irradiated. Thus, the application path can be significantly reduced compared to a maximum application path that extends over both build plane edges, for example covering the entire available build plane. Thus, the application time can be reduced allowing for a reduction of the overall manufacturing time required to additively build the three-dimensional object.

In other words, the disclosure allows for applying build material in a sub-part and therefore, not over the entire available build plane. Thus, a partial layer can be applied in the build plane, wherein the partial layer is not applied / does not extend over the available build plane, but only extends over the sub-part of the available build plane. Of course, an arbitrary mode of applying the build material is feasible, wherein for example, the application unit may comprise an application element, such as a coater blade, that can be moved relative to the build plane (or the build plane can be moved relative to the application element), wherein build material can be distributed via the application element.

According to a preferred embodiment of the apparatus, the application unit may be adapted to apply build material in the build plane along the application path that is defined by at least one irradiation region in which build material is to be irradiated via an irradiation device to additively build the three-dimensional object, wherein the application path is shorter than a maximum application path extending over the entire available build plane. As described before, the application path the application unit is adapted to apply build material along, does not extend over the entire available build plane but only over the sub-part of the available build plane. The application path according to this embodiment may be defined by at least one irradiation region in which build material is to be irradiated via an irradiation device.

In other words, the irradiation device irradiates build material in the layer of build material that is applied in the sub-part to additively build the three-dimensional object. Hence, dependent on the irradiation region, for example the size or the position of the irradiation region, in which build material will be irradiated in the irradiation step following the current application step, it is possible to define the application path along which the application unit applies build material to form the sub-part. By taking the irradiation region into calculation, it is possible to only apply build material in the sub-part of the available build plane where build material is needed to be irradiated in the succeeding irradiation step. The irradiation region therefore, corresponds to the cross-section of the part of the object that is formed via the irradiation of the current or corresponding layer of build material applied in the sub-part. The object cross-section can, for example, be defined via object data, such as three-dimensional data (CAD data). Thus, dependent on the geometry of the part of the object the irradiation region can be defined, wherein the size of the sub-part and therefore, the application path can be determined.

Further, a control unit can be provided that is adapted to generate or receive irradiation data defining the position of at least one irradiation region of the object relative to the build plane, wherein the irradiation device is adapted to generate the at least one irradiation region based on the irradiation data. Thus, the control unit may be an integral (modular) unit of the additive manufacturing apparatus, in particular of the irradiation device or the control unit may be a separate (modular) unit that is connected with the additive manufacturing apparatus or can be connected with the additive manufacturing apparatus. The control unit may generate or receive irradiation data that define the position of at least one irradiation region of the object relative to the build plane. The irradiation region(s) thereby define the melting tracks or the regions in the build plane that is are irradiated via the energy source, in particular the energy beam, to form the corresponding parts of the three-dimensional object in the corresponding layers of build material.

According to this embodiment, it is possible that the control unit generates or receives the irradiation data, wherein it is possible to define the position of the at least one irradiation region relative to the build plane. In other words, the position of the irradiation region can be defined and can be adjusted via the control unit. Thus, the application process and the irradiation process can be enhanced by choosing the position of the at least one irradiation region in a region of the available build plane in that the effort for applying build material can be reduced. For example, it is possible to choose or adjust the position of the at least one irradiation region as close to one of the build plane edges as possible, to reduce the application path accordingly. Thus, the time required to apply build material can be reduced significantly, as the application path along which the build material has to be applied, can be reduced.

The application unit may be adapted to apply build material along the application path defined by at least one dimension and/or position of the irradiation region and the layer of build material to be applied in the corresponding application step. Thus, dependent on the position and/or at least one dimension (preferably in application direction) of the at least one irradiation region, it is possible to apply the build material via the application unit. For example, the application path can be defined taking the position and/or the at least one dimension of the irradiation region that is to be formed in the corresponding layer of build material into calculation. Thus, build material may be applied in a sub-part of the available build plane along an application path that is defined by the at least one dimension and/or the position of the irradiation region. This allows for adjusting the application path dependent on the at least one dimension and/or the position of the irradiation region and therefore, form or define the sub-part as it is needed to generate the irradiation region in the layer of build material applied in the sub-part of the available build plane.

The irradiation device of the apparatus may further be adapted to generate at least one irradiation region in a position relative to the build plane dependent on the geometrical shape of the object, in particular dependent on a geometrical distribution of the object, preferably dependent on the center of mass of the object. Of course, the geometrical shape of the object, the geometrical distribution of the object and the center of mass of the object can also be related to the actual layer of build material and/or the irradiation region linked to the irradiation pattern required to form the part of the object that is to be irradiated in the corresponding layer of build material. By taking the geometrical shape of the object into calculation, in particular the geometrical distribution of the object, preferably the center of mass of the object, it is possible to arrange the irradiation region or adjust the position of the irradiation region as close to the build plane edge as possible to reduce the application path and therefore, reduce the time required to apply the build material. The geometrical distribution of the object and/or the center of mass of the object may be weighted over at least two layers or the irradiation regions to be irradiated in at least two succeeding layers. Of course, it is also possible to determine the respective parameters over the entire object.

According to another embodiment of the apparatus, the application unit may be adapted to partially apply layers of build material along the application path for a defined number of succeeding layers. Of course, the application path may vary from layer to layer or may be constant for at least two succeeding layers. The partial application of build material, i.e. forming a sub-part or merely applying build material in a sub-part of the available build plane can be continued for a defined number of succeeding layers according to this embodiment. The number of layers can be chosen dependent on various circumstances or requirements of the additive manufacturing process, wherein, of course, the number of succeeding layers in which the partial application of build material is performed allows for a reduction of the application time. For example, it is possible to alternate between an application of build material over the entire available build plane and applying build material in a sub-part of the available build plane only for the defined number of succeeding layers.

The apparatus may further be improved in that the application unit may be adapted to generate or receive the number of succeeding layers, wherein the number of succeeding layers may depend on the size of the sub-part, in particular a length of an application path and/or a dimension of the build plane, preferably perpendicular to an application direction, and/or a chemical and/or physical parameter of the build material and/or a layer thickness. As described before, the number of succeeding layers defines how often the application unit partially applies build material in the sub-part of the available build plane. The number of layers, i.e. number of partial application steps, may be defined dependent on the size of the sub-part, in particular a length of the application path and/or a dimension of the build plane. The size of the sub-part or the length of the application path directly influences the volume of build material that is applied in the sub-part and therefore, defines the distribution of build material in the available build plane, i.e. in the available volume in which build material can be applied. Besides, the layer thickness of layers of build material to be applied via the application unit can be taken into calculation.

It is also possible to consider a chemical and/or physical parameter of the build material, such as a build material particle size or a particle size distribution and/or a chemical composition of the build material that influences the mechanical or chemical behavior of the build material. Thus, by taking one or more of the various parameters into calculation, it is possible to ensure that the applied volume of build material in the sub-part or in the defined number of succeeding layers, remains stable and does not cause build material to move, e.g. to trickle, and thereby to negatively impact the additive manufacturing process.

Further, the application unit may be adapted to perform at least one application step for filling the build chamber, preferably over the entire available build plane, in particular to the level of the previously applied layer, preferably after every defined number of succeeding layers. In other words, it is possible to apply layers of build material in the sub-part along the application path which comprises an endpoint arranged between the build plane edges of the available build plane.

The partial application of build material forming layers of build material in sub-parts of the available build plane can be continued or repeated for the defined number of succeeding layers, as described before.

As for the defined number of succeeding layers build material is applied only in a sub-part of the available build plane, the available build chamber, which is delimited by the edges of the available build plane, for example sidewalls of a build chamber, is not completely filled, but only a sub-part of the available build chamber, as defined by the sub-parts in which the build material is applied, is used and filled with build material. After the last layer of build material, as defined by the number of succeeding layers, has been applied in the sub-part of the available build plane, an application step can be performed for filling the available build chamber, in particular filling the part of the build chamber that has been left empty due to the partial application steps. Hence, build material can be applied and filled into the gap that has been generated by partially applying build material in the sub-parts only.

The application of build material for filling the build chamber allows for filling the gap and generating a stabilization of the applied (non-consolidated) build material. As the filling of the build chamber is only performed after the defined number of succeeding layers, it is possible to perform the partial application of build material in the sub-part of the available build plane, for reducing the time required to apply the build material and only apply build material over the entire available build plane, to fill the build chamber and thereby generate stabilization for the partially applied layers of build material to avoid a motion of build material that has been applied, for example trickling of build material.

According to another embodiment of the inventive apparatus, the application unit may be adapted to selectively control a dose factor relating to an amount of build material that is provided for each application step, in particular dependent on the length of the application path or a size of the sub-part. According to this embodiment, it is possible to control a dose factor, in particular via the application unit, wherein the dose factor relates to the amount of build material that is provided to be applied in the build plane. In other words, the dose factor defines the amount of build material that is provided and can be applied via the application unit in the build plane in the next application step. Thus, by controlling the dose factor dependent on the length of the application path of the size of the sub-part it is possible to provide the proper amount of build material for forming the layer of build material. Hence, the amount of surplus build material can be reduced and it is possible to ensure that enough build material is provided for applying the layer of build material (in the sub-part).

The irradiation device may preferably be adapted to generate the irradiation region in an area of the available build plane neighboring a dose plane of the apparatus, preferably as close as possible. According to this embodiment, the irradiation device may generate the irradiation region in an area of the available build plane neighboring a dose plane. The term "dose plane" of the apparatus may relate to a plane in which build material can be provided for applying a layer of build material in the available build plane. For example, the dose plane may be provided via a dose module, for example comprising a dose element carrying a volume of build material that can be adjusted in height to provide fresh build material that can be conveyed via an application element of the application unit from the dose plane to the available build plane. By generating the irradiation region and in area neighboring the dose plane, it is ensured that the application path can be kept as short as possible in that the sub-part of the available build plane can be reduced in size allowing for a reduction of the application time.

The distribution or position of the single irradiation regions in the corresponding layers forming the three-dimensional object can be chosen in that the at least one irradiation region that is closest towards the dose plane may contact or start at the build plane edge that faces the dose plane. Of course, it is possible to space the start of the respective irradiation region from the build plane edge by a defined distance. Advantageously, the application unit may be adapted to define or receive a safety distance for the application path that extends the application path in application direction. Thus, it can be ensured that build material is not applied only in a region of the available build plane in which the at least one irradiation region is generated in the following irradiation step, but a safety distance can be defined that extends the application path and therefore, extends the layer of build material applied in the sub-part of the available build plane. Therefore, it is ensured that the movement effects of the non-consolidated build material are reduced or limited to build material arranged along the safety distance and that the part of the layer of the sub-part in which the at least one irradiation region is to be generated is not affected by the movement effects of the non-consolidated build material. Thus, it is ensured that the irradiation region can be properly generated in the sub-part and that the sub-part is not "too short". Further, the application unit may comprise at least one application element that is movable relative to the build plane, in particular a coater blade, that is adapted to convey build material from a dose plane to the build plane or a build material dispenser that is adapted to dispense build material onto the build plane. The application unit therefore, may comprise an application element that can be moved relative to the build plane, in particular over the sub-part of the available build plane and to apply (convey and/or distribute) the build material in the sub-part. It is also possible to directly dispense the build material onto the sub-part.

Besides, the disclosure relates to an application unit for an apparatus for additively manufacturing three-dimensional objects by means of successive layerwise selective irradiation and consolidation of layers of a build material which can be consolidated by means of an energy source, in particular an apparatus, as described before, which application unit that is adapted to layerwise apply build material in an available build plane that extends between two build plane edges, wherein the application unit is adapted to apply at least one layer of build material along an application path in a sub-part of the available build plane, wherein the application path starts at a starting point and ends at an endpoint between the build plane edges.

Further, the disclosure relates to a method for operating at least one apparatus for additively manufacturing three-dimensional objects by means of successive layerwise selective irradiation and consolidation of layers of a build material which can be consolidated by means of an energy source, wherein build material is layerwise applied in an available build plane that extends between two build plane edges, wherein at least one layer of build material is applied along an application path in a sub-part of an available build plane, wherein the application path starts at a starting point and ends at an endpoint between two build plane edges.

Self-evidently, all features, details and advantages described with respect to the apparatus are fully transferable to he application unit and the method.

Exemplary embodiments of the invention are described with reference to the Fig. The Fig. are schematic diagrams, wherein
- Fig. 1: shows an inventive apparatus in a first application step; and
- Fig. 2: shows the inventive apparatus from Fig. 1 in a second application step.

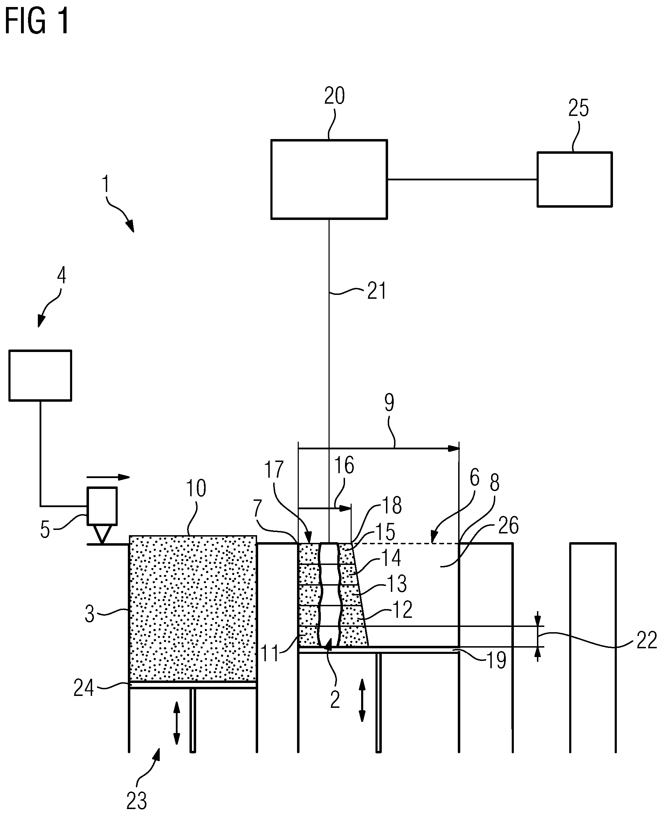

Fig. 1 shows an apparatus 1 for additively manufacturing three-dimensional objects 2 by means of successive layerwise selective irradiation and consolidation of layers of a build material 3. The build material 3 can be layerwise applied to form the three-dimensional object 2, as will be described in detail below. The apparatus 1 comprises an application unit 4 with an application element 5, wherein the application unit 4 is adapted to layerwise apply the build material 3 in an available build plane 6. The available build plane 6 extends between two build plane edges 7, 8 and therefore, a maximum application path 9 is defined between the build plane edges 7, 8. Thus, the application unit 4 can pick up a build material 3 from a dose plane 10 via the application element 5 and convey the build material 3 towards the available build plane 6, wherein a layer of build material 3 is applied in the entire available build plane 6, if the application element 5 is moved along the maximum application path 9.

The application unit 4 of the inventive apparatus 1 further is adapted to apply at least one layer 11 - 15 of build material 3 along an application path 16 in a sub-part 17 of the available build plane 6, wherein the application path 16 starts at a starting point and ends at an ending point 18 between the build plane edges 7, 8. In this exemplary embodiment, the starting point is the build plane edge 7 and the endpoint is arranged between both build plane edges 7, 8. Thus, when applying a layer 11 - 15 of build material 3 along the application path 16, the layer 11 - 15 is not applied in the whole available build plane 6, but only in a sub-part 17 of the available build plane 6.

Hence, in this exemplary embodiment, to build the three-dimensional object 2, the application unit 4 applies a first layer 11 along an application path 16, wherein the endpoint 18 is arranged between the build plane edges 7, 8. The first layer 11 is, according to this exemplary embodiment, applied onto a height adjustable carrying element 19. Of course, build material 3 can also be applied onto a fixed carrying element 19, for instance. Afterwards, an irradiation device 20 of the apparatus 1 generates an energy beam 21 to generate a corresponding irradiation region in the layer 11 by guiding the energy beam 21 selectively over the sub-part 17 to consolidate the build material 3 to form the respective part of the object 2 in the layer 11. Subsequently, the carrying element 19 can be lowered by a layer thickness 22 to allow for the next layer 12 to be applied in the sub-part 17 of the available build plane 9.

For applying the second layer 12 of build material 3, the application element 5 again picks up build material 3 from the dose plane 10 and conveys the build material 3 over the sub-part 17 by moving along the application path 16. To provide fresh build material 3 a dose module 23 is provided that may comprise a dose element 24 that is height adjustably arranged to provide an amount of build material 3 as defined by a dose factor. Of course, the application path 16 for the layers 11 - 15 can vary. As depicted in the exemplary embodiment in Fig. 1, the application paths 16 decrease over the layers 11 - 15.

As can further be derived from Fig. 1, application time can be saved, as the application element 5 does not have to be moved along the maximum application path 9 in every application step, but it is sufficient to move the application element 5 along the application path 16 to apply build material 3 to form the layers 11 - 15. To further reduce the application time, a control unit 25 is provided that is adapted to generate or receive irradiation data defining the position of the irradiation regions of the object 2 relative to the available build plane 6, wherein the irradiation device 20 is adapted to generate the at least one irradiation region in which the energy beam 21 is guided to consolidate the build material 3 based on the irradiation data. According to this exemplary embodiment, the irradiation device 20 generates the irradiation regions, i.e. the regions in which build material 3 is irradiated to form the corresponding parts of the object 2 in the corresponding layer 11 - 15, based on the irradiation data that is provided via the control unit 25. The irradiation data are preferably generated in that the positions of the corresponding parts of the object 2, i.e. the single irradiation regions, are arranged as close to the build plane edge 7, as possible.

The build plane edge 7 is the edge of the available build plane 6 facing the dose plane 10, i.e. facing the dose module 23. By positioning the irradiation regions of the object 2 close to the build plane edge 7 that is facing the dose plane 10, the application time can be reduced, as the application path 16 can be reduced, for example compared to an object 2 being positioned neighboring the build plane edge 8. For generating the irradiation data, i.e. positioning the irradiation regions relative to the available build plane 6, the irradiation device 20 or the control unit 25 may be adapted to generate at least one irradiation region dependent on the geometrical shape of the object 2, preferably dependent on the geometrical distribution of the object 2, such as the center of mass of the object 2, in particular determined for the individual layers 11 - 15.

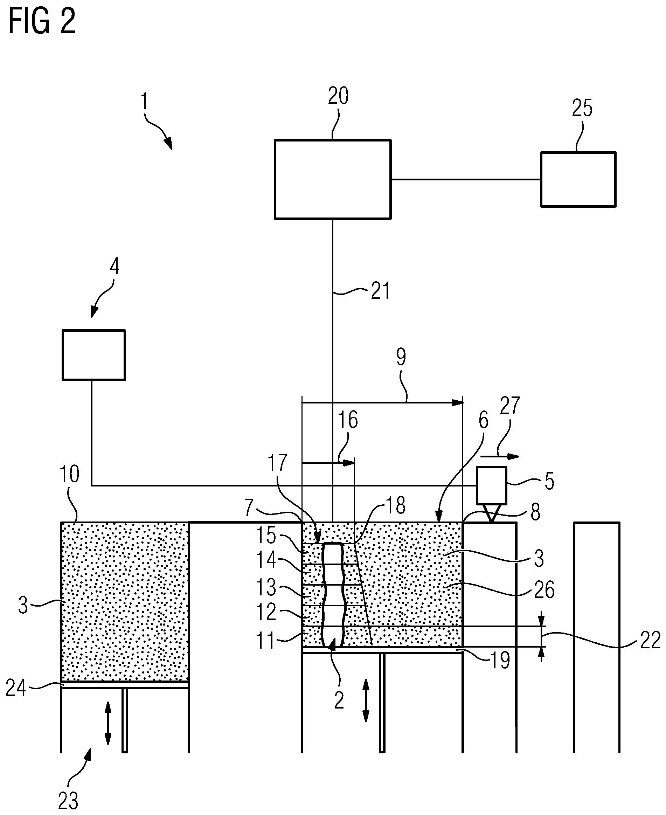

The control unit 25 may further define a number of succeeding layers along which the application unit 4 is adapted to partially apply build material 3, i.e. apply build material 3 in the sub-part 17 of the available build plane 6, only. After the defined number of succeeding layers has been reached or the defined number of succeeding layers has been applied, another application step for filling build material 3 is performed. For example, in this exemplary embodiment the number of succeeding layers of may be five, wherein after the five layers 11 - 15 have been applied, an application step for filling the build chamber 26 may be performed, preferably over the entire available build plane 6 to fill build material 3 to the level of the previously applied layer 15. The application step that is performed for filling the build chamber 26 is depicted in Fig. 2.

For filling the build chamber 26, the application element 5 is moved over the dose plane 10, wherein preferably a different dose factor can be used to provide fresh build material 3 for the application step for filling the build chamber 26. The build material 3 provided in the dose plane 10 can be picked up via the application element 5 and conveyed to the available build plane 6, wherein the gap that is left or the volume that is free in the build chamber 26 can be filled by performing the application step for filling the build chamber 26.

By filling the build chamber 26 it can be assured that the non-consolidated build material 3 that surrounds the object 2 will not move, for example trickle. The number of succeeding layers can be defined based on various parameters of the build material 3, such as chemical and/or physical parameters of the build material 3, for example a chemical composition of the build material 3 or mechanical properties, such as the particle size and/or the particle size distribution of the build material 3. Further, it is possible to define the number of succeeding layers dependent on properties of the object 2, such as geometrical properties, for example the size of the object 2 or the size of the irradiation regions in the layers 11 - 15, for instance. Further, the length of the application path 16 or the dimensions of the available build plane 6 can be taken into calculation.

Thus, it is possible to reduce the application time, as it is not necessary to apply build material 3 over the available build plane 6 in every layer, but it is possible to apply build material 3 only in a sub-part 17 in which an irradiation region is arranged, i.e. in which build material 3 has to be consolidated to form a part of the object 2. Thus, the application time can be saved, as the application element 5 does not have to be moved over the entire available build plane 6 in every application step, but it is sufficient to perform a complete application step moving the application element 5 along the maximum application path 9 to fill the build chamber 26 with build material 3.

Of course, a safety distance for the application path 16 can be defined in that the application path 16 is increased by the safety distance, in that the layers 11 - 15 are increased in application direction (arrow 27). Thus, a layer 11 - 15 larger than the irradiation region in the corresponding layer 11 - 15 is applied. Self-evidently, the method may be performed on the apparatus 1, preferably using an application unit 4.

## Claims

1. Method for operating at least one apparatus (1) for additively manufacturing three-dimensional objects (2) by means of successive layerwise selective irradiation and consolidation of layers of a build material (3) which can be consolidated by means of an energy source, wherein build material (3) is applied in an available build plane (6) that extends between two build plane edges (7, 8), wherein a defined number of succeeding layers (11 - 15) of build material (3) is applied along an application path (16) in a sub-part (17) of an available build plane (6), wherein the application path (16) starts at a starting point and ends at an endpoint (18) between two build plane edges (7, 8), **characterized in that** at least one application step is performed for filling the build chamber (26), over the entire available build plane (6) to the level of the previously applied defined number of succeeding layers (11 - 15), preferably after every defined number of succeeding layers (11-15).

2. Method according to claim 1, **characterized in that** build material (3) is applied in the available build plane (6) along the application path (16) that is defined by at least one irradiation region in which build material (3) is to be irradiated via an irradiation device (20) to additively build the three-dimensional object (2), wherein the application path (16) is smaller than a maximum application path (9) extending over the entire available build plane (6).

3. Method according to one of the preceding claims, **characterized by** generating or receiving via a control unit (25) irradiation data defining the position of at least one irradiation region of the object (2) relative to the available build plane (6), wherein the the at least one irradiation region is generated via the irradiation device (20) based on the irradiation data.

4. Method according to one of the preceding claims, **characterized in that** build material (3) is applied via the application unit (4) along the application path (16) defined by at least one dimension and/or position of the irradiation region in respective ones of the defined number of succeeding layers (11 - 15) of build material (3) to be applied in the corresponding application step.

5. Method according to one of the preceding claims, **characterized in that** at least one irradiation region is generated via the irradiation device (20) in a position relative to the available build plane (6) dependent on the geometrical shape of the object (2), in particular dependent on a geometrical distribution of the object (2), preferably dependent on the center of mass of the object (2).

6. Method according to one of the preceding claims, **characterized in that** the defined number of succeeding layers is generated or received via the application unit (4), wherein the defined number of succeeding layers depends on a size of the sub-part (17), in particular a length of an application path (16) and/or a dimension of the available build plane (6), preferably perpendicular to an application direction (27), and/or a chemical and/or physical parameter of the build material (3) and/or a layer thickness (22).

7. Method according to one of the preceding claims, **characterized in that** a dose factor relating to an amount of build material (3) that is provided for each application step is selectively controlled via the application unit (4), in particular dependent on the length of the application path (16) or a size of the sub-part (17).

8. Method according to one of the preceding claims, **characterized in that** the irradiation region is generated via the irradiation device (20) in an area of the available build plane (6) neighboring a dose plane (10) of the apparatus (1), preferably as close as possible.

9. Method according to one of the preceding claims, **characterized in that** a safety distance for the application path (16) that extends the application path (16) in application direction (27) is defined or received via the application unit (4).

## Patentansprüche

1. Verfahren zum Betreiben mindestens einer Vorrichtung (1) zum additiven Herstellen dreidimensionaler Objekte (2) mittels aufeinanderfolgender schichtweiser selektiver Bestrahlung und Konsolidierung von Schichten eines Baumaterials (3), die mittels einer Energiequelle konsolidiert werden können, wobei Baumaterial (3) in einer verfügbaren Bauebene (6) aufgebracht wird, die sich zwischen zwei Bauebenenkanten (7, 8) erstreckt, wobei eine definierte Anzahl nachfolgender Schichten (11 - 15) des Baumaterials (3) entlang eines Applikationspfads (16) in einem Unterteil (17) einer verfügbaren Bauebene (6) aufgebracht wird, wobei der Applikationspfad (16) an einem Ausgangspunkt beginnt und an einem Endpunkt (18) zwischen zwei Bauebenenkanten (7, 8) endet, **dadurch gekennzeichnet, dass** mindestens ein Applikationsschritt zum Befüllen der Baukammer (26) über die gesamte verfügbare Bauebene (6) bis zur Ebene der zuvor aufgebrachten definierten Anzahl nachfolgender Schichten (11 - 15) durchgeführt wird, vorzugsweise nach jeder definierten Anzahl nachfolgender Schichten (11-15).

2. Verfahren nach Anspruch 1, **dadurch gekennzeichnet, dass** Baumaterial (3) in der verfügbaren Bauebene (6) entlang des Anwendungspfades (16) aufgebracht wird, der durch mindestens einen Bestrahlungsbereich definiert ist, in dem Baumaterial (3) über eine Bestrahlungsvorrichtung (20) bestrahlt werden soll, um das dreidimensionale Objekt (2) additiv aufzubauen, wobei der Anwendungspfad (16) kleiner ist als ein maximaler Anwendungspfad (9), der sich über die gesamte verfügbare Bauebene (6) erstreckt.

3. Verfahren nach einem der vorhergehenden Ansprüche, **dadurch gekennzeichnet, dass** über eine Steuereinheit (25) Bestrahlungsdaten erzeugt oder empfangen werden, welche die Position mindestens eines Bestrahlungsbereichs des Objekts (2) relativ zur verfügbaren Bauebene (6) definieren, wobei der mindestens eine Bestrahlungsbereich über die Bestrahlungsvorrichtung (20) basierend auf den Bestrahlungsdaten erzeugt wird.

4. Verfahren nach einem der vorhergehenden Ansprüche, **dadurch gekennzeichnet, dass** Baumaterial (3) über die Applikationseinheit (4) entlang des Applikationspfades (16) aufgebracht wird, der durch mindestens eine Dimension und/oder Position des Bestrahlungsbereichs in jeweils einer der definierten Anzahl nachfolgender Schichten (11 - 15) des Baumaterials (3) definiert ist, die im entsprechenden Applikationsschritt aufzubringen sind.

5. Verfahren nach einem der vorhergehenden Ansprüche, **dadurch gekennzeichnet, dass** mindestens ein Bestrahlungsbereich über die Bestrahlungsvorrichtung (20) in einer Position relativ zur verfügbaren Bauebene (6) erzeugt wird, abhängig von der geometrischen Form des Objekts (2), insbesondere abhängig von einer geometrischen Verteilung des Objekts (2), vorzugsweise abhängig vom Massenschwerpunkt des Objekts (2).

6. Verfahren nach einem der vorhergehenden Ansprüche, **dadurch gekennzeichnet, dass** die definierte Anzahl nachfolgender Schichten über die Applikationseinheit (4) erzeugt oder empfangen wird, wobei die definierte Anzahl nachfolgender Schichten von einer Größe des Unterteils (17), insbesondere einer Länge eines Applikationspfads (16) und/oder einer Dimension der verfügbaren Build-Ebene (6), vorzugsweise senkrecht zu einer Applikationsrichtung (27), und/oder einem chemischen und/oder physikalischen Parameter des Build-Materials (3) und/oder einer Schichtdicke (22) abhängt.

7. Verfahren nach einem der vorhergehenden Ansprüche, **dadurch gekennzeichnet, dass** über die Applikationseinheit (4), insbesondere abhängig von der Länge des Applikationsweges (16) oder einer Größe des Unterteils (17), ein Dosisfaktor, der sich auf eine Menge Baumaterial (3) bezieht, die für jeden Applikationsschritt vorgesehen ist, selektiv gesteuert wird.

8. Verfahren nach einem der vorhergehenden Ansprüche, **dadurch gekennzeichnet, dass** der Bestrahlungsbereich über die Bestrahlungsvorrichtung (20) in einem Bereich der verfügbaren Bauebene (6) neben einer Dosisebene (10) der Vorrichtung (1) erzeugt wird, vorzugsweise so nahe wie möglich.

9. Verfahren nach einem der vorhergehenden Ansprüche, **dadurch gekennzeichnet, dass** über die Applikationseinheit (4) ein Sicherheitsabstand für den Applikationspfad (16) definiert oder empfangen wird, der den Applikationspfad (16) in Applikationsrichtung (27) verlängert.

## Revendications

1. Method for operating at least one apparatus (1) for additively manufacturing three-dimensional objects (2) by means of successive layerwise selective irradiation and consolidation of layers of a build material (3) which can be consolidated by means of an energy source, wherein build material (3) is applied in an available build plane (6) that extends between two build plane edges (7, 8), wherein a defined number of succeeding layers (11 - 15) of build material (3) is applied along an application path (16) in a sub-part (17) of an available build plane (6), wherein the application path (16) starts at a starting point and ends at an endpoint (18) between two build plane edges (7, 8), **characterized in that** at least one application step is performed for filling the build chamber (26), over the entire available build plane (6) to the level of the previously applied defined number of succeeding layers (11 - 15), preferably after every defined number of succeeding layers (11-15).

2. Méthode selon la revendication 1, **caractérisée en ce que** le matériau de construction (3) est appliqué dans le plan de construction disponible (6) le long du chemin d'application (16) qui est défini par au moins une région d'irradiation dans laquelle le matériau de construction (3) doit être irradié via un dispositif d'irradiation (20) pour construire additivement l'objet tridimensionnel (2), dans laquelle le chemin d'application (16) est plus petit qu'un chemin d'application maximum (9) s'étendant sur l'ensemble du plan de construction disponible (6).

3. Méthode selon l'une des revendications précédentes, **caractérisée par** la génération ou la réception par l'intermédiaire d'une unité de commande (25) de données d'irradiation définissant la position d'au moins une région d'irradiation de l'objet (2) par rapport au plan de construction disponible (6), dans laquelle l'au moins une région d'irradiation est générée par l'intermédiaire du dispositif d'irradiation (20) sur la base des données d'irradiation.

4. Méthode selon l'une des revendications précédentes, **caractérisée en ce que** le matériau de construction (3) est appliqué via l'unité d'application (4) le long du chemin d'application (16) défini par au moins une dimension et/ou position de la région d'irradiation dans les différentes couches du nombre défini de couches suivantes (11 - 15) du matériau de construction (3) à appliquer à l'étape d'application correspondante.

5. Méthode selon l'une des revendications précédentes, **caractérisée en ce qu'au** moins une région d'irradiation est générée via le dispositif d'irradiation (20) dans une position par rapport au plan de construction disponible (6) dépendant de la forme géométrique de l'objet (2), en particulier dépendant d'une distribution géométrique de l'objet (2), de préférence dépendant du centre de masse de l'objet (2).

6. Méthode selon l'une des revendications précédentes, **caractérisée en ce que** le nombre défini de couches successives est généré ou reçu via l'unité d'application (4), dans laquelle le nombre défini de couches successives dépend d'une taille de la sous-partie (17), en particulier d'une longueur d'un chemin d'application (16) et/ou d'une dimension du plan de construction disponible (6), de préférence perpendiculaire à une direction d'application (27), et/ou d'un paramètre chimique et/ou physique du matériau de construction (3) et/ou d'une épaisseur de couche (22).

7. Méthode selon l'une des revendications précédentes, **caractérisée en ce qu'un** facteur de dose relatif à une quantité de matériau de construction (3) fournie pour chaque étape d'application est contrôlé sélectivement par l'intermédiaire de l'unité d'application (4), en particulier en fonction de la longueur du chemin d'application (16) ou d'une taille de la sous-partie (17).

8. Méthode selon l'une des revendications précédentes, **caractérisée en ce que** la région d'irradiation est générée par le dispositif d'irradiation (20) dans une zone du plan de construction disponible (6) voisine d'un plan de dose (10) de l'appareil (1), de préférence aussi proche que possible.

9. Méthode selon l'une des revendications précédentes, **caractérisée en ce qu'une** distance de sécurité pour le chemin d'application (16) qui prolonge le chemin d'application (16) dans le sens d'application (27) est définie ou reçue via l'unité d'application (4).
